# EUROPÄISCHE PATENTANMELDUNG

(11) **EP 3 650 714 A1**
(43) Veröffentlichungstag der Anmeldung: **13.05.2020**
(21) Anmeldenummer: 19000486.1
(22) Anmeldetag: 24.10.2019
(51) Int. Cl.: F16B 13/08

(54) **SCHWERLASTBEFESTIGUNGSVORRICHTUNG**

(30) Priorität: 30.10.2018 DE 202018005011 U
(71) Anmelder: Mittelsdorf, Peter, 98597 Breitungen (DE)
(72) Erfinder: Mittelsdorf, Peter, 98597 Breitungen (DE)
(74) Vertreter: Weihrauch, Frank

(57) **Zusammenfassung**

Die Erfindung betrifft eine Schwerlastbefestigungsvorrichtung, aufweisend eine Zugbolzeneinheit (1) und ein Ankerelement (2), wobei die Zugbolzeneinheit (1) einen längserstreckten Zugbolzen (3) und einen Hintergreifungskopf (4) aufweist, wobei das Ankerelement (2) zwei längserstreckte Auflagekörper (6), ein Verbindungselement (7) und einen Anschlag (8) aufweist, wobei das Verbindungsstück (7) die Auflagekörper (6) verbindet und diese in ihrer Lagebeziehung zueinander festlegt und wobei der Anschlag (8) außerhalb eines Masseschwerpunktes des Ankerelements (2) angeordnet ist, wobei die Zugbolzeneinheit (1) und das Ankerelement (2) so ausgebildet sind, dass
in einer Montageausgangslage der Zugbolzen (3) längs zu den Auflagekörpern (6) in dem Auflagekörperzwischenraum (9) angeordnet ist, sowie dass in einer Montageendlage der Zugbolzen (3) quer in dem Auflagekörperzwischenraum (9) und das Ankerelement (2) vertikal und mit dem Anschlag an dem Zugbolzen (3) hängend angeordnet ist und dass die Kopfunterseite (5) des Hintergreifungskopfes (4) auf einer Oberseite (10) der Auflagekörper (6) mit Druckkontakt aufliegt und dass eine Unterseite (11) der Auflagekörper mit Druckkontakt auf einer Baustruktur (12) aufliegt und axiale Kräfte in die Baustruktur (12) einträgt.

## Beschreibung

Die Erfindung betrifft eine Schwerlastbefestigungsvorrichtung zur Verwendung an Hohlwänden.

Für die Befestigung von Lasten an Baustrukturen sind aus dem Stand der Technik unterschiedliche Lösungen bekannt. Besondere Probleme ergeben sich, wenn hohe Auszugskräfte aufgenommen werden müssen, die Rückseite der baulichen Struktur für die Anbringung eines Gegenlagers nicht zugänglich ist und trotzdem eine hohe Zuverlässigkeit der Befestigung gefordert wird, weil beispielsweise an Abrissobjekten Arbeitsplattformen für Personen in großer Höhe befestigt werden müssen.

Aus dem Stand der Technik sind zwar verschiedene Dübelarten für die Verankerung von Schrauben oder Bolzen an Hohlwänden bekannt. So werden beispielsweise Spreizdübel, Einschraubdübel oder Durchsteckdübel mit Hintergreifungen für Trockenbau- und Gipswände verwendet. Diese sind jedoch für die Anwendung bei sehr hohen Belastungen nicht geeignet.

Nachteilig sind zudem Lösungen, die besondere Festigkeitsanforderungen an die Baustruktur stellen, da diese nicht zuverlässsig anwendbar sind, wenn es sich um nicht definierte Bautrukturen wie beispielsweise Baustrukturen bei Abrissobjekten handelt.

Die Aufgabe der Erfindung ist es, eine zuverlässige und robuste Lösung für eine Schwerlastbefestigungsvorrichtung für eine Baustruktur aufzuzeigen, welche ohne einen Zugang zu einer Rückseite der Baustruktur montierbar ist, eine hohe Sicherheit gegen Anwendungsfehler aufweist und eine hohe Auszugsfestigkeit auch bei einer unsicheren Stabilität der Baustruktur bereitstellen kann sowie kostengünstig herstellbar ist. Ferner ist es die Aufgabe der Erfindung, ein Verfahren für die Herstellung einer Schwerlastbefestigungsvorrichtung an einer Baustruktur aufzuzeigen.

Die Aufgabe wird in Bezug auf die Vorrichtung durch die im Patentanspruch 1 aufgeführten Merkmale gelöst. Bevorzugte Weiterbildungen ergeben sich aus den Unteransprüchen. In Bezug auf das Verfahren wirddie Aufgabe durch die im Patentanspruch 7 aufgeführten Merkmale gelöst.

Die Schwerlastvorrichtung weist als Grundkomponenten erfindungsgemäß eine Zugbolzeneinheit und ein Ankerelement auf.

Erfindungsgemäß weist die Zugbolzeneinheit einen längserstreckten Zugbolzen und einen Hintergreifungskopf auf.

Der längserstreckte Zugbolzen ist so gestaltet, dass er große Zugkräfte aufnehmen kann. Dies kann vorzugsweise durch einen metallischen Bolzen erreicht werden. Der Zugbolzen ist vorzugsweise vollständig oder abschnittsweise mit einer strukturierten Oberfläche versehen. Als strukturierte Oberfläche werden Rastelemente oder Gewinde auf der Oberfläche des Bolzens verstanden, die beispielsweise insbesondere zur Befestigung von Schrauben oder Klemmkörpern dienen.

Der Hintergreifungskopf weist erfindungsgemäß eine Kopfunterseite auf und ist an einem vorderen Abschnitt des Zugbolzens angeordnet. Der Hintergreifungskopf kann an dem Zugbolzen fest (beispielsweise mit dem Zugbolzen verschweißt) oder auf der strukturierten Oberfläche beweglich (beispielsweise durch Verschrauben oder Einrasten) angeordnet sein. Der Hintergreifungskopf ist vorzugsweise zumindest in einem Teilbereich zylindrisch gestaltet.

Erfindungsgemäß ist die Kopfunterseite orthogonal zu der Längsachse des Zugbolzens angeordnet. Durch die Orthogonalität zu der Längsachse wird eine zuverlässige Sperrwirkung und Kraftübertragung auf das Ankerelement ermöglicht.

Das Ankerelement weist erfindungsgemäß zwei längserstreckte Auflagekörper, ein Verbindungselement und einen Anschlag auf.

Die Auflagekörper sind erfindungsgemäß beabstandet und im Wesentlichen parallel angeordnet. Die Auflagekörper bestehen vorzugsweise aus einem druck- und zugfesten Metall, vorzugsweise aus Stahl. Andere Materialien sind ebenfalls möglich.

Zwischen den Auflagekörpern befindet sich erfindungsgemäß ein Auflagekörperzwischenraum. Durch die beabstandete und im Wesentlichen parallele Anordnung der beiden Auflagekörper entsteht zwischen diesen der Auflagekörperzwischenraum. Der Auflagekörperzwischenraum ist so ausgebildet, dass in ihm der Zugbolzen aufnehmbar ist.

Erfindungsgemäß verbindet das Verbindungsstück die beiden Auflagekörper fest miteinander, wodurch deren Lage zueinander festgelegt wird. Das Verbindungsstück ist vorzugsweise ein starrer Körper, welcher quer über den Auflagekörperzwischenraum gelegt und dann fixiert wird. Die Verbindung der beiden Auflagekörper kann auch über mehrere Verbindungsstücke erfolgen.

Die Verbindungsstücke können auch so angebracht werden, dass sie den Masseschwerpunkt des Ankerelementes deutlich verschieben. Dies ermöglicht es, den Anschlag näher an der räumlichen Mitte der Längserstreckung der Auflagekörper anzuordnen, womit eine gleichmäßigere Kraftübertragung von den Auflagekörpern auf die Baustruktur ermöglicht wird.

Der Anschlag ist erfindungsgemäß außerhalb des Masseschwerpunktes des Ankerelementes angeordnet. Durch die Anordnung des Anschlags außerhalb des Masseschwerpunktes wird durch die Schwerkraft ein Drehmoment am Ankerelement erzeugt. Der Mittelpunkt dieser Drehung liegt an der Kante des Anschlages, mit welcher das Ankerelement auf dem Zugbolzen aufliegt.

Nach der Drehbewegung liegt der Anschlag vorzugsweise an der Unterseite des Hintergreifungskopfes an.

Die Zugbolzeneinheit und das Ankerelement sind erfindungsgemäß so ausgebildet, dass in einer Montageausgangslage der Zugbolzen längs zu den Auflagekörpern und in dem Auflagekörpernzwischenraum angeordnet ist. In der Montageausgangslage wird das Ankerelement vorzugsweise manuell an den Zugbolzen angeklappt und weist so nur eine geringe Querschnittsfläche auf. Die Längsachse des Ankerelements und die Längsachse des Zugbolzens sind dann im Wesentlichen parallel angeordnet.

Das Ankerlement und der vordere Abschnitt des Zugbolzens sind in dieser Anordnung von einer Vorderseite in ein Bohrloch in einer Baustruktur einführbar, wobei der Durchmesser des Bohrlochs so gewählt wird, dass er den lichten Querschnitt des Ankerlements aufnehmen kann. Dabei werden das Ankerelement und der vordere Abschnitt des Zugbolzens soweit in das Bohrloch eingeführt, bis das Ankerelement an der Rückseite des Bohrlochs wieder austritt. Das Ankerelement gelangt schwerkraftbedingt in eine vertikale Position, indem es eine Verschwenkung um den Anschlag ausführt.

In der Montageendlage ist der Zugbolzen erfindungsgemäß quer in dem Auflagekörperzwischenraum und das Ankerelement vertikal angeordnet. Dabei hängt erfindungsgemäß das Ankerlement mit dem Anschlag an dem Zugbolzen.

In der Montageendlage übergreift das Ankerelement durch das Vertikalstellen den Bohrungsquerschnitt. Durch die Schwerkraft und die Lage des Masseschwerpunkts nimmt das Ankerelement die vertikale Stellung automatisch ein. Als vertikale Stellung werden sowohl eine exakt senkrechte Stellung als auch schräge Stellungen verstanden. Daher bedarf es als besonderen Vorteil keiner manuellen Unterstützung auf der Rückseite der Baustruktur bei der Positionierung des Ankerelements. Vorzugsweise ist das Verbindungsstück oder ein anderer Körper so angeordnet, dass der Zugbolzen auf der gegenüber dem Anschlag liegenden Seite festgelegt wird, so dass ein Herunterfallen des Ankerelementes unmöglich wird.

So kann die Schwerlastbefestigungsvorrichtung durch ein Bohrloch einer Baustruktur geführt werden und das Ankerelement richtet sich auf der anderen Seite automatisch aus. Durch ein Ziehen am Zugbolzen legt sich die Kopfunterseite des Hintergreifungskopfes auf die Oberseite der Auflagekörper des Ankerelementes und schiebt das Ankerelement mit der Unterseite der Auflagekörper gegen die Baustruktur. Das Ankerelement kann aufgrund des vergrößeren Querschnitts das Bohrloch nicht wieder passieren und verhindert so zuverlässig ein weiteres Ausziehen der Schwerlastbefestigungsvorrichtung.

Die Kopfunterseite des Hintergreifungskopfes liegt erfindungsgemäß auf einer Oberseite der Auflagekörper mit Druckkontakt auf.

Erfindungsgemäß liegt eine Unterseite der Auflagekörper mit Druckkontakt auf einer Baustruktur auf und trägt so axiale Kräfte in die Baustruktur ein.

Durch die Ausgestaltung des Ankerelementes kann die Verteilung der axialen Kräfte gesteuert werden. Bei einer Vergrößerung des Auflagekörpers wird auch deren Unterseite und damit die Auflagefläche an der Baustruktur vergrößert, was zu einer Erhöhung der möglichen Zugkräfte führt.

Auf der Vorderseite der Baustruktur können nun an der Zugbolzeneinheit zuverlässig sehr hohe Lasten abgetragen werden, wobei je nach Ausbildung der Zugbolzeneinheit geeignete Lastaufnahmen, wie beispielsweise Gewindemuttern, gewählt werden können. Als Vorderseite der Baustruktur wird die dem Anwender zugängliche Seite, an der eine Last befestigt werden soll, verstanden. Die Rückseite ist die der Vorderseite gegenüberliegende Seite der Baustruktur.

Die Schwerlastbefestigungsvorrichtung weist insbesondere folgende Vorteile auf:
Ein erster wesentlicher Vorteil besteht darin, dass die Schwerlastbefestigungsvorrichtung auch dann montiert werden kann, wenn die Rückseite der Baustruktur nicht zugänglich ist.

Besonders vorteilhaft ist es ferner, dass das Ankerelement problemlos sehr lang ausgebildet werden kann und dass auf diese Weise axiale Kräfte auch in einem großen Abstand von dem Bohrloch auf die Baustruktur übertragbar sind. Dies ist vorteilhaft, weil dort die Schwächung der Baustruktur durch das Bohrloch weniger wirksam ist. Zudem kann die Schwerlastbefestigungsvorrichtung auch bei unsicheren Baustrukturen eine große Auszugsfestigkeit bereitstellen.

Ferner ist es vorteilhaft, dass die Schwerlastbefestigungsvorrichtung ohne spezielle Werkzeuge sowie mit geringem Zeitaufwand montierbar ist und unmittelbar nach der Montage für den Abtrag von Lasten bereitsteht.

Zudem setzt die ordnungsgemäße Funktion keine besondere Präzision bei der Ausbildung des Bohrlochs in der Baustruktur voraus. Ein weiterer Vorteil ist eine sehr robuste und einfache Bauweise, welche zudem kostengünstig bereitstellbar und zum anderen sehr verlässlich und sicher in der Anwendung ist.

Gemäß einer vorteilhaften Weiterbildung weist die Schwerlastbefestigungsvorrichtung eine Lastaufnahmeeinheit auf.

Die Lastaufnahmeeinheit weist einen zylindrischen Tragkörper und einen Kopplungskörper auf, welche miteinander verbunden sind.

Der zylindrische Tragkörper ist gemäß der vorteilhaften Weiterbildung so ausgebildet, dass er in einem Bohrloch der Baustruktur zumindest abschnittsweise eingesetzt wird und laterale Kräfte auf die Baustruktur überträgt. Als laterale Kräfte werden die quer zu der Längsachse der Zugbolzeneinheit gerichteten Kräfte verstanden. Diese wirken auf die Innenwandungen des Bohrlochs in der Baustruktur. Dabei wird der zylindrische Tragkörper gemäß dieser vorteilhaften Weiterbildung von dem Zugbolzen in einer Längsachse durchsetzt.

Der zylindrische Tragkörper ist so gestaltet, dass sein Außendurchmesser kleiner als der Durchmesser des Bohrloches ist. Der Außendurchmesser des zylindrischen Tragkörpers entspricht für eine bessere Kraftübertragung vorzugsweise den Bohrlochdurchmesser.

Ferner überragt der Kopplungskörper den zylindrischen Tragkörper und überträgt dabei die axialen Kräfte auf die Baustruktur.

Der Kopplungskörper kann in Abhängigkeit von den zu montierenden Lasten unterschiedlich ausgebildet sein. So kann bei einer Anordnung eines winkelprofilartigen Kopplungskörpers ein horizontaler Montageflansch geschaffen werden, welche als Auflage für Gerüstteile dienen und somit Laufflächen an einer vertikalen Baustruktur ermöglichen kann.

Ein solcher Montageflansch kann insbesondere Bohrungen zur Aufnahme von Schraubverbindungen aufweisen.

Weiterhin kann der Kopplungskörper so gestaltet sein, dass er eine Verankerung von anderen Geräten wie beispielsweise Hebezeugen an der Wand ermöglicht.

Der Vorteil dieser Weiterbildung besteht in der besonders hohen möglichen Lastaufnahme.

Entsprechend einer weiterführenden Weiterbildung weist die Schwerlastbefestigungsvorrichtung zudem eine Erstarrungsmasse auf, die in einem Ringraum zwischen dem zylindrischen Tragskörper und der Baustruktur angeordnet ist. Die Erstarrungsmasse ist so ausgebildet, dass sie in formbaren Zustand in Ringraum einbringbar und dort aushärtbar ist. Die Erstarrungsmasse ist eine vorzugsweise pastöse oder spritzfähige sowie selbstaushärtende Masse, welche insbesondere durch Verpressen, Verspritzen oder manuelles Auftragen in das Bohrloch eingebracht werden kann. Als Erstarrungsmasse werden vorzugsweise Baustoffe verstanden, welche mittels anorganischer Bindemittel (wie Kalk oder Zement) nach einer Aufschlämmung mit Wasser aushärten. Es sind auch andere Baustoffe einsetzbar, welche beispielsweise organische Bindemittel wie Harze, Polymere, Bitumen und/oder organische Lösungsmittel verwenden. Es ist jede aushärtende Masse einsetzbar, welche die beschriebenen Verarbeitungseigenschaften sowie im ausgehärteten Zustand eine ausreichende Festigkeit und Anhaftung an der Baustruktur aufweist.

Der Erstarrungsmasse ist gemäß dieser Weiterbildung ausgebildet, einen radialen Formschluss zwischen dem zylindrischen Tragkörper in der Baustruktur bereitzustellen.

Die Erstarrungsmasse bildet im Ringraum eine formschlüssige Verbindung zwischen dem zylindrischen Tragkörper und der Baustruktur. Als radialer Formschluss ist zu verstehen, dass der zylindrische Tragkörper quer zu seiner Längsachse in seiner Lagebeziehung zu der Baustruktur festgelegt ist.

Durch die formschlüssige Verbindung von Baustruktur, ausgehärteter Erstarrungsmasse und zylindrischem Tragkörper wird der Krafteintrag in die Baustruktur bei Belastung des Auflagekörpers besser verteilt und damit die Flächenpressungswerte reduziert. Dadurch wird die maximale Tragkraft und Auszugsfestigkeit der Vorrichtung weiter erhöht.

Ein weiterer Vorteil besteht insofern, dass für die Montage der Schwerlastbefestigungsvorrichtung auch solche Bohrlöcher oder Baustrukturöffnungen verwandt werden können, die eine erhebliche Abweichung von einer idealen zylindrischen Form aufweisen. Zum ersten muss weniger Sorgfalt und Zeit für das Setzen von Bohrlöchern aufgewandt werden. Zum zweiten kann sich so auch die Möglichkeit ergeben, etwaige bereits vorhandene Öffnungen in der Baustruktur zu verwenden und so den Aufwand für das Einbringen von Bohrlöchern zu vermeiden.

In einer hierauf aufbauenden vorteilhaften Weiterbildung weist der zylindrische Tragkörper an seiner äußeren, dem Bohrloch zugewandten Mantelfläche eine Hinterschneidungsfläche auf. Bei der Hinterschneidungsfläche kann es sich beispielsweise um eine Wandung einer Ringnut oder einer Ringwulst, eine konische Form des zylindrischen Trägkörpers mit einer Aufweitung in Richtung der Rückseite der Baustruktur oder um sonstige Vorsprünge oder Formabschnitte an der Mantelfläche des zylindrischen Tragkörpers handeln. Der Verpressmörtel passt sich der Hinterschneidungskontur an, so dass zusätzlich zu dem radialen Formschluss nach dieser Weiterbildung auch ein axialer Formschluss erreicht wird. Als axialer Formschluss ist es zu verstehen, dass der zylindrische Tragkörper longitudinal zu seiner Längsachse in seiner Lagebeziehung zu der Baustruktur festgelegt ist.

Entsprechend einer weiteren vorteilhaften Weiterbildung weist die Lastaufnahmeeinheit eine Injektionsöffnung auf. Die Injektionsöffnung ist ausgebildet, ein Einspritzen bzw. ein Einpressen der Erstarrungsmasse in den Ringraum zwischen Baustruktur und zylindrischen Tragkörper zu ermöglichen.

Gemäß einer vorteilhaften Weiterbildung wird der Anschlag durch das Verbindungsstück gebildet.

Durch die funktionelle Integrierung von Anschlag und Verbindungsstück kann Material gespart und somit eine günstigere Bauweise realisiert werden.

Entsprechend einer anderen Weiterbildung ist der Zugbolzen als ein Hohlprofil ausgebildet, in dem sich ein Innengewinde befindet. Ferner weist nach dieser Weiterbildung das Arretierungsmittel ein Außengewinde auf, dass in das Innengewinde des Hohlprofils eingreift.

Das Arretierungsmittel kann so als Standardkopfschraube ausgebildet sein, die in das Innengewinde eingedreht wird, so dass deren Schraubenkopf eine axiale Kraft überträgt.

Das Hohlprofil gemäß dieser Weiterbildung liegt bevorzugt als ein Innengewinderohr mit durchgehendem Innengewinde vor. In diesem Fall kann vorteilhaft zudem der Hintergreifungskopf als eine Schraube ausgebildet sein, die in das Innengewinde des Innengewinderohrs eingeschraubt ist und deren Auflageringfläche die Kopfunterseite des Hintergreifungskopfs ausbildet. Es ist aber auch möglich, dass der Zugbolzen lediglich auf dem dem Arretierungsmittel zugewandten vorderen Endabschnitt ein Innengewinde aufweist.

Die Weiterbildung weist insbesondere den Vorteil auf, dass die Länge des Zugbolzens auf die Dicke der Baustruktur abgestimmt werden kann. Damit wird mit einem überraschend einfachen Mittel erreicht, dass der Zugbolzen auf der Vorderseite nicht störend übersteht und nach der Montage nicht gekürzt werden muss. Insbesondere können für typische Mauerwerksstärke Zugbolzen in Standdardlängen vorgehalten werden.

Hierbei ist es insbesondere vorgesehen, dass vor der Montage in den vorderseitigen Endabschnitt eine lange Gewindestange mit einem Außengewinde eingeschraubt wird. Die Gewindestange dient dann als Griffstange, mit der die Zugbolzeneinheit mit noch angeklapptem Ankerelement so tief in das Bohrloch eingeschoben werden kann, dass dem Ankerelement der Bewegungsraum für seine schwerkraftbedingte Lageveränderung in eine vertikale Lage zur Verfügung steht. Danach kann mittels der Gewindestange die Zugbolzeneinheit in Richtung der Vorderseite soweit zurückgezogen werden, dass das Ankerelement zuverlässig anliegt. Nun befindet sich der vorderseitige Endabschnitt des Zugbolzens wieder in einer von der Vorderseite zugänglichen Position. Nachfolgend kann nun die Gewindestange wieder demoniert und das Arretierungsmittel eingeschraubt werden, so dass damit ein Lastaufnahmemittel befestigt wird.

Erfindungsgemäß weist das Verfahren zur Herstellung einer Schwerlastbefestigung an einer Baustruktur mittels einer Schwerlastbefestigungsvorrichtung folgende Verfahrensschritte auf:
a) Bereitstellen eines Bohrlochs in der Baustruktur
b) Herstellen einer Montageausgangslage der Schwerlastbefestigungsvorrichtung, wobei der Zugbolzen längs zu den Auflagekörpern und in dem Auflagekörperzwischenraum angeordnet wird
c) axiales Einführen der Schwerlastbefestigungsvorrichtung in deren Montageausgangslage in das Bohrloch, beginnend mit einem vorderen Ende des Zugbolzens bis zu einem zumindest teilweisen Eintritt des zylindrischen Tragkörpers in das Bohrloch
d) Durchführen der schwerkraftbedingten Veränderung der Lage des Ankerelements in eine vertikale Lage zur Bereitstellung einer Montageendlage
e) Einbringen der Erstarrungsmasse in den Ringraum zwischen dem zylindrischen Tragkörper und der Baustruktur
f) Abwarten einer Aushärtung der Erstarrungsmasse zur Herstellung eines radialen Formschlusses

Die Verfahrensschritte werden nachfolgend näher beschrieben:
a) Bereitstellen eines Bohrlochs in der Baustruktur

Das für die Anordnung der Schwerlastbefestigungsvorrichtung in der Baustruktur benötigte Bohrloch wird beispielsweise manuell durch einen Bohrvorgang erstellt oder es wird eine in der Baustruktur bereits vorhandene Durchsetzung verwendet. Eine vorhandene Durchsetzung ist dann als Bohrloch im Sinne des vorliegenden Verfahrens verwendbar, wenn es im Wesentlichen die oben beschriebenen Eigenschaften aufweist.
b) Herstellen einer Montageausgangslage der Schwerlastbefestigungsvorrichtung, wobei der Zugbolzen längs zu den Auflagekörpern und in dem Auflagekörperzwischenraum angeordnet wird

Die Schwerlastbefestigungsvorrichtung muss vor dem Einsetzen in die Montageausgangslage gebracht werden. Hierzu wird der Zugbolzen längs zu den Auflagekörpern in den Auflagekörperzwischenraum eingelegt. Die Auflagekörper verlaufen so entlang des Zugbolzens, wodurch die Schwerlastbefestigungsvorrichtung in diesem Zustand einen minimalen Querschnitt quer zu der Längsachse des Zugbolzens aufweist. In der Montageausgangslage weist die Schwerlastbefestigungsvorrichtung noch keine Erstarrungsmasse auf. Ferner kann in der Montageausgangslage die Lastaufnahmevorrichtung noch unmontiert sein.
c) axiales Einführen der Schwerlastbefestigungsvorrichtung in deren Montageausgangslage in das Bohrloch, beginnend mit einem vorderen Ende des Zugbolzens bis zu einem Eintritt des zylindrischen Tragkörpers in das Bohrloch

Die Schwerlastbefestigungsvorrichtung wird beginnend mit dem vorderen Ende des Zugbolzens axial in das Bohrloch eingeführt. Die Schwerlastbefestigungsvorrichtung ist nur in der Montageausgangslage in das Bohrloch einführbar.

Das vordere Ende des Zugbolzens ist erfindungsgemäß die Seite, an welcher der Hintergreifungskopf angeordnet ist. Am hinteren Ende des Zugbolzens ist die Lastaufnahmeeinheit mit dem zylindrischen Tragkörper angeordnet, welcher beim Einführen in das Bohrloch eintritt. Alternativ kann dieser Verfahrensschritt auch so durchgeführt werden, dass die Lastaufnahmeeinheit erst nach dem Durchführen des Zugbolzens und des Ankerelements auf den Zugbolzen montiert und vorgeschoben wird, bis der zylindrische Tragkörper in das Bohrloch eintritt.
d) Durchführen der schwerkraftbedingten Veränderung der Lage des Ankerelements in eine vertikale Lage zur Bereitstellung einer Montageendlage

Die Schwerlastbefestigungsvorrichtung wird so tief in das Bohrloch eingeschoben, dass das Ankerelement hinter der durchbohrten Baustruktur schwerkraftbedingt seine Lage ändern kann. Der Schwerpunkt des Ankerelements ist so angeordnet, dass sich das Ankerelement hinter der Baustruktur aufrichtet und mit dem Anschlag auf den Zugbolzen aufliegt. Durch ein Ziehen am Zugbolzen drückt der Hintergreifungskopf das Ankerelement mit seiner Unterseite an die Baustruktur. Das Ankerelement befindet sich nun in der Montageendlage.

Die Lastaufnahmeeinheit mit dem zylindrischen Tragkörper kann, falls nicht bereits erfolgt, nun auf den Zugbolzen aufgesetzt und im Bohrloch platziert werden.
e) Einbringen der Erstarrungsmasse in den Ringraum zwischen dem zylindrischen Tragkörper und der Baustruktur

Ist die Lastaufnahmeeinheit wie beschrieben im Bohrloch platziert worden, wird die Erstarrungsmasse durch eine vorzugsweise im Kopplungskörper vorhandene Injektionsöffnung in den Ringraum zwischen dem zylindrischen Tragkörper und der Baustruktur eingebracht.

Die Einbringung der Erstarrungsmasse erfolgt vorzugsweise durch Einpressen. Es sind jedoch auch andere Methoden zum Einbringen der Erstarrungsmasse, beispielsweise durch Auftrag mit einer Spachtel oder durch Gießen möglich.
f) Abwarten einer Aushärtung der Erstarrungsmasse zur Herstellung eines radialen Formschlusses

Der Verpressmörtel härtet in einer Ruhephase selbstständig in dem Ringraum aus und stellt somit einen radialen Formschluss zwischen dem zylindrischen Tragkörper und der Baustruktur her. Vorzugsweise weist die Erstarrungsmasse ein Quellverhalten bei der Aushärtung auf, so dass der zylindrische Tragkörper spielfrei festgelegt wird.

Die Buchstabierung der Verfahrensschritte dient lediglich der eindeutigen Benennung und trifft keine Festlegung zur Reihenfolge der Durchführung der Verfahrensschritte. Einige der Verfahrensschritte bedingen jedoch einander und legen so eine Reihenfolge fest. So erfolgt der Verfahrensschritt b) vor dem Verfahrensschritt c), da die Herstellung der Montageausgangslage gemäß Verfahrensschritt b) zwingend vor dem Einsetzen in das Bohrloch c) erfolgen muss.

Das Bereitstellen des Bohrlochs gemäß Verfahrensschritt a) kann aber beispielsweise auch zwischen den Verfahrensschritten b) und c) erfolgen.

Weiterhin bedingt Verfahrensschritt d) (Lageänderung des Ankerelementes) den vorangegangenen Verfahrensschritt c) (Einführen der Schwerlastbefestigungsvorrichtung in das Bohrloch) sowie Verfahrensschritt f) (Abwarten der Aushärtung) den vorangegangenen Verfahrensschritt e) (Einbringen der Erstarrungsmasse).

Abgesehen von den aufgeführten Einschränkungen ist die Reihenfolge der Verfahrensschritte jedoch austauschbar.

So ist insbesondere auch das Einbringen der Erstarrungsmasse in das Bohrloch als erster Verfahrensschritt denkbar.

Soweit in einer Weiterbildung der Zugbolzen als Hohlprofil mit einem Innengewinde vorgesehen ist, in die ein Arretierungsmittel mit einem Außengewinde eingreift, sind als Weiterbildung des Verfahrens als zusätzliche Verfahrensschritte die Verfahrensschritte vorgesehen, die in den Beschreibungsabschnitten zur Vorrichtung beschrieben wurde. Demnach ist als weiterer Verfahrensschritt c0), der vor dem Verfahrensschritt c) durchzuführen ist, eine Gewindestange in die Zugbolzeneinheit als Griffstange einzuschrauben. Die Gewindestange dient dann als Griff für die Ausführung von Verfahrensschritt c). Nach dem Verfahrensschritt d) erfolgt dann als Verfahrensschritt d1) ein Herausschrauben der Gewindestange aus dem Zugbolzen und als Verfahrensschritt d2) ein Einschrauben des Arretierungsmittels. Hierbei gilt, dass weder c0) unmittelbar vor c) noch d1) und d2) unmittelbar nach d) durchgeführt werden muss.

Die Erfindung wird als Ausführungsbeispiel anhand von
- Fig. 1: Schwerlastverbindungsvorrichtung in Montageausgangslage (Drauf- und Seitenansicht)
- Fig. 2: Funktionsschema der Schwerlastbefestigungsvorrichtung
- Fig. 3: Endmontierte Schwerlastbefestigungsvorrichtung
- Fig. 4: Ansicht entlang des Zugbolzens
- Fig. 5: Vormontierte Schwerlastvorrichtung mit Zugbolzen mit Innenwinde

### näher erläutert.

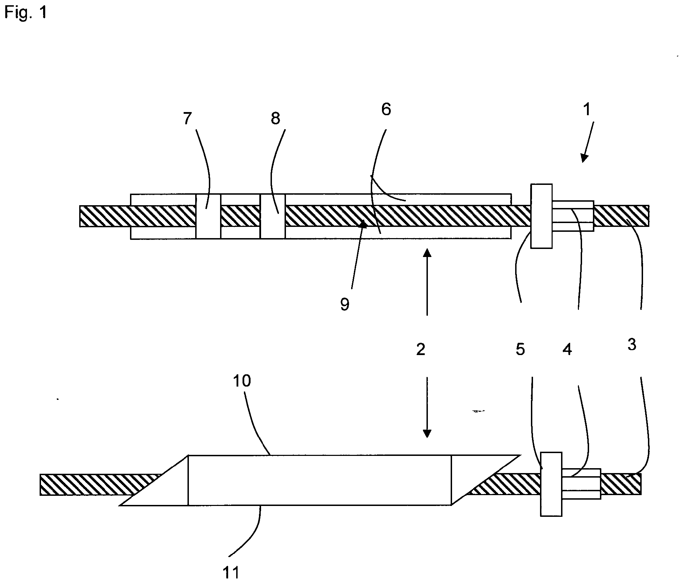

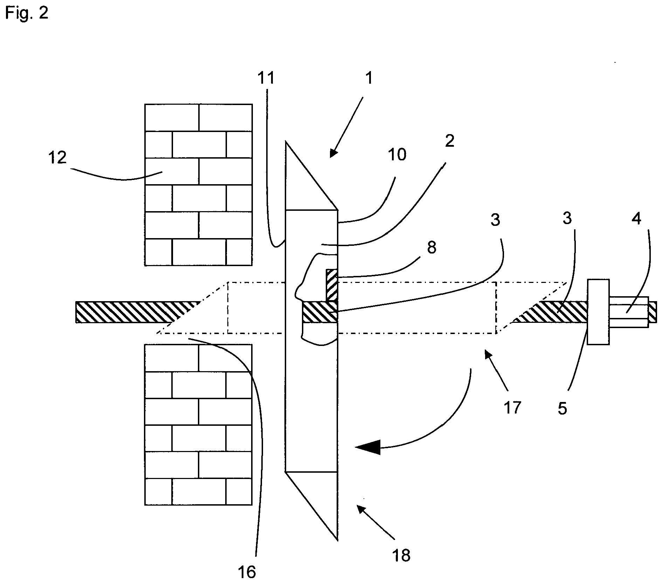

Die Figur 1 zeigt eine Drauf- und eine Seitenansicht eines Ausführungsbeispiels der Schwerlastbefestigungsvorrichtung in einer Montageausgangslage. Diese Darstellungen zeigen die Schwerlastbefestigungsvorrichtung in der Montageausgangslage vor dem Einsetzen in das Bohrloch. Die Zugbolzeneinheit 1 besteht aus einem Hintergreifungskopf 4 und einem Zugbolzen 3. Das Ankerelement 2 wird aus zwei Auflagekörpern 6 gebildet, welche über ein Verbindungsstück 7 verbunden und in ihrer Lage zueinander fixiert sind. Als Verbindungsstück 7 dient in dieser Ausführung eine mit der Oberseite 10 der Auflagekörper 6 verschweißte Metallplatte. Die Auflagekörper 6 sind im Ausführungsbeispiel mit Anlaufschrägen ausgeführt, um einem Verhaken in einem Bohrloch 16 (siehe Fig. 2) entgegen zu wirken.

Zwischen den beiden Auflagekörpern 6 wird ein Auflagekörperzwischenraum 9 eingeschlossen, in welchen der Zugbolzen 3 eingelegt ist. Der Zugbolzen 3 ist hier als Gewindestange ausgeführt.

Der Anschlag 8 ist in dieser Ausführung, baugleich zum Verbindungsstück 7, als aufgeschweißte Metallplatte ausgeführt und befindet sich außerhalb des Masseschwerpunktes.

Der Hintergreifungskopf 4 ist in dieser Ausführung auf den Zugbolzen 3 aufgeschraubt. Er weist eine runde Kopfunterseite 5 auf und ist in einem Abschnitt als Mutter ausgestaltet, wodurch seine Position auf dem Zugbolzen 3 bei der Montage verändert werden kann.

In Figur 2 ist ein Funktionsschema der Zugbolzeneinheit 1 gezeigt, welche mit dem Hintergreifungskopf 4 voran durch ein Bohrloch 16 in einer Baustruktur 12 geschoben wurde. Baustruktur 12 und Bohrloch 16 selbst sind nicht Bestandteil der erfindungsgemäßen Schwerlastbefestigungsvorrichtung.

Die Zugbolzeneinheit 1 mit Ankerelement 2 wird in einer Montageausgangslage, bei der das Ankerelement 2 in horizontaler Position 17 gestrichelt dargestellt ist, durch das Bohrloch 16 geschoben. Sobald das Ankerelement 2 auf der Rückseite der Baustruktur 12 wieder aus dem Bohrloch ausgetreten ist, kippt es aufgrund der Schwerkraft in eine vertikale Position 18.

Die teilgeschnittene Darstellung des Ankerelements 2 in seiner vertikalen Position 18 zeigt dabei die Lagebeziehung zwischen dem Anschlag 8 und dem Zugbolzen 3. Das Ankerelement 2 hängt mit seinem Anschlag 8 auf dem Zugbolzen 3.

Beim Zurückziehen des Zugbolzens 3 wird das Ankerelement 2 durch die Kopfunterseite 5 des Hintergreifungskopfes 4 mit seiner Unterseite 11 an die Baustruktur 12 gedrückt. Dabei liegt die Kopfunterseite 5 auf der Oberseite 10 des Ankerelementes 2 auf. Damit ist die Montageendlage 18 erreicht.

Die Kopfunterseite 5 weist hierfür einen geringeren Durchmesser als das Bohrloch auf, ist aber dennoch groß genug, um nicht durch den Auflagekörperzwischenraum 9 (siehe Fig. 1) zu passen.

Der Anschlag 3 liegt in der Montageendlage 18 auf dem Zugbolzen auf und bestimmt die Position des Ankerelements.

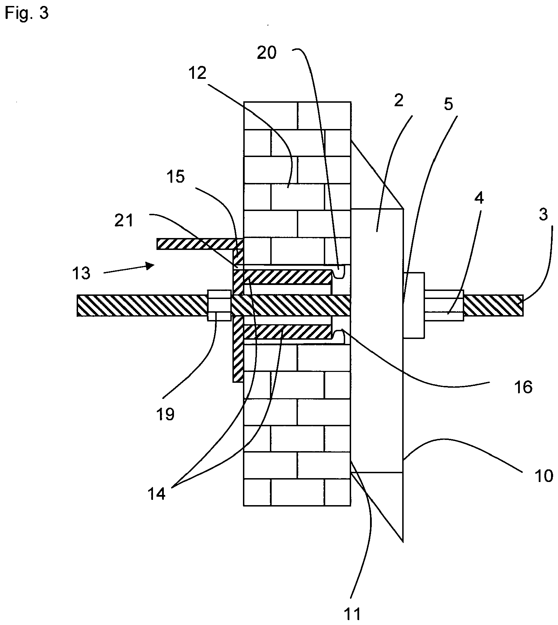

Die Figur 3 zeigt ein Ausführungsbeispiel einer besonderen Weiterbildung der Schwerlastbefestigungsvorrichtung in einer Montageendlage. Neben der zuvor beschriebenen Zugbolzeneinheit 1 ist hier zusätzlich die Lastaufnahmeeinheit 13 dargestellt, welche mit einem Arretierungsmittel 19 gegen den Hintergreifungskopf 4 verspannt und dadurch gegen die Baustruktur 12 gepresst wird. Das Arretierungsmittel 19 ist in dieser Ausführung eine Mutter, welche auf den Zugbolzen 3 aufgesetzt worden ist.

Die Lastaufnahmeeinheit 13 besteht in diesem Ausführungsbeispiel aus dem rechtwinkligen Kopplungskörper 15 und dem zylindrischen Tragkörper 14. Der Kopplungskörper 15 weist hier zudem eine Injektionsöffnung 21 auf, durch die die Erstarrungsmasse 20 in den Ringraum zwischen der Baustruktur 12 und dem zylindrischen Tragkörper 14 eingebracht wird. Der Kopplungskörper verhindert durch sein flächiges Anliegen an der Baustruktur 12 zudem einen übermäßigen Austritt der Erstarrungsmasse 20 vor deren Erstarrung. Die Kontaktflächen von Kopplungskörper 15 mit der Baustruktur 12 und von zylindrischem Tragkörper 14 zu der Erstarrungsmasse 20 und dieser mit der Baustruktur 12 sowie die Unterseite 11 des Ankerelementes 2 übertragen die Kräfte, welche durch eine Belastung der Lastaufnahmeeinheit 13 entstehen, auf die Baustruktur 12.

Der zylindrische Tragkörper 14 entspricht im Außendurchmesser hier im Wesentlichen dem Innendurchmesser des Bohrloches 16, so dass die Erstarrungsmasse in diesem Ausführungsbeispiel nur ein geringes Volumen ausfüllt.

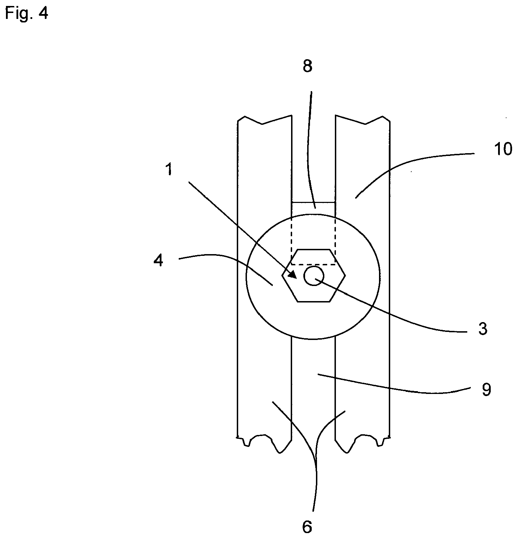

Die Figur 4 zeigt eine Ansicht der Zugbolzeneinheit 1 entlang des Zugbolzens 3 in Montageendlage. Der Hintergreifungskopf 4 liegt auf der Oberseite 10 der Auflagekörper 6 auf. Der Anschlag 8 liegt auf dem Zugbolzen 3 auf und legt somit die Position der Anschlagkörper 6 fest.

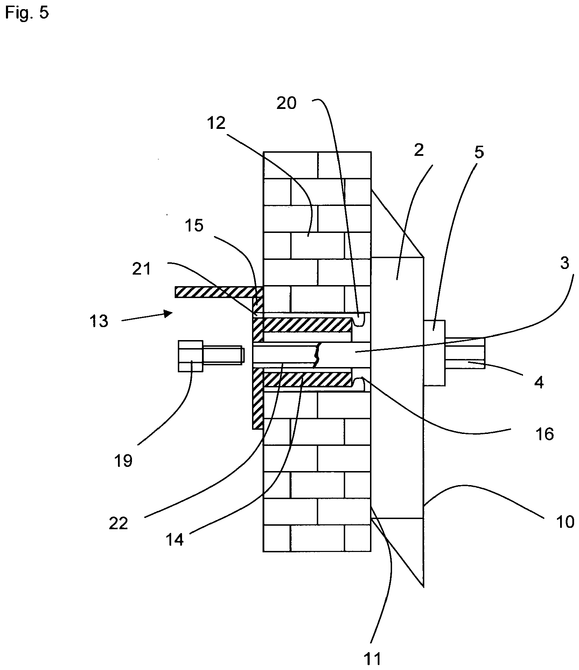

Figur 5 zeigt ähnlich Fig. 3 ein Ausführungsbeispiel in einem montierten Zustand, so dass die Beschreibungen zum Aufbau aus Fig. 3 auch hier zutreffen. In dem Ausführungsbeispiel gem. Fig. 5 ist der Zugbolzen 3 jedoch als Innengewinderohr mit einem Innengewinde 22 ausgebildet. Das Arretierungsmittel 19 ist als eine Schraube mit Schraubenkopf ausgebildet. Das Außengewinde (ohne Bezugszeichen) greift in Endmontagelage in dass Innengewinde 22 ein. Fig. 5 zeigt noch den vormontierten Zustand, in dem das Arretierungsmittel 19 noch nicht eingeschraubt ist.

### Verwendete Bezugszeichen

- 1: Zugbolzeneinheit
- 2: Ankerelement
- 3: Zugbolzen
- 4: Hintergreifungskopf
- 5: Kopfunterseite
- 6: Auflagekörper
- 7: Verbindungsstück
- 8: Anschlag
- 9: Auflagekörperzwischenraum
- 10: Oberseite
- 11: Unterseite
- 12: Baustruktur
- 13: Lastaufnahmeeinheit
- 14: zylindrischer Tragkörper
- 15: Kopplungskörper
- 16: Bohrloch
- 17: horizontale Position des Ankerelements
- 18: vertikale Position des Ankerelements
- 19: Arretierungsmittel
- 20: Erstarrungsmasse
- 21: Injektionsöffnung
- 22: Innengewinde

## Patentansprüche

1. Schwerlastbefestigungsvorrichtung,
aufweisend eine Zugbolzeneinheit (1) und ein Ankerelement (2)
**dadurch gekennzeichnet,**
**dass** die Zugbolzeneinheit (1) einen längserstreckten Zugbolzen (3) und einen Hintergreifungskopf (4) aufweist,
wobei der Hintergreifungskopf (4) an einem vorderen Abschnitt des Zugbolzens (3) angebracht ist,
wobei der Hintergreifungskopf (4) eine Kopfunterseite (5) aufweist und wobei die Kopfunterseite (5) im Wesentlichen orthogonal zu der Längsachse des Zugbolzens (3) angeordnet ist,
**dass** das Ankerelement (2) zwei längserstreckte Auflagekörper (6), ein Verbindungselement (7) und einen Anschlag (8) aufweist,
wobei die Auflagekörper (6) zueinander beabstandet und im Wesentlichen parallel angeordnet sind,
wobei die Auflagekörper (6) zwischen sich einen Auflagekörperzwischenraum (9) ausbilden,
wobei das Verbindungsstück (7) die Auflagekörper (6) verbindet und diese in ihrer Lagebeziehung zueinander festlegt und wobei der Anschlag (8) außerhalb eines Masseschwerpunktes des Ankerelements (2) angeordnet ist,
**dass** die Zugbolzeneinheit (1) und das Ankerelement (2) so ausgebildet sind, dass in einer Montageausgangslage der Zugbolzen (3) längs zu den Auflagekörpern (6) in dem Auflagekörperzwischenraum (9) angeordnet ist, sowie dass in einer Montageendlage der Zugbolzen (3) quer in dem Auflagekörperzwischenraum (9) und das Ankerelement (2) vertikal und mit dem Anschlag an dem Zugbolzen (3) hängend angeordnet ist und
**dass** die Kopfunterseite (5) des Hintergreifungskopfes (4) auf einer Oberseite (10) der Auflagekörper (6) mit Druckkontakt aufliegt und
**dass** eine Unterseite (11) der Auflagekörper mit Druckkontakt auf einer Baustruktur (12) aufliegt und axiale Kräfte in die Baustruktur (12) einträgt.

2. Schwerlastbefestigungsvorrichtung nach Anspruch 1,
**dadurch gekennzeichnet,**
**dass** die Schwerlastbefestigungsvorrichtung ferner eine Lastaufnahmeeinheit (13) aufweist,
wobei die Lastaufnahmeeinheit (13) einen zylindrischen Tragkörper (14) und einen Kopplungskörper (15) aufweist,
wobei der zylindrische Tragkörper (14) und der Kopplungskörper (15) miteinander verbunden sind,
wobei der zylindrische Tragkörper (14) so ausgebildet ist,
in ein Bohrloch (16) der Baustruktur (12) zumindest abschnittsweise einzugreifen und laterale Kräfte auf die Baustruktur (12) zu übertragen, dass der zylindrische Tragkörper (14) von dem Zugbolzen (3) in einer Längsachse durchsetzt wird und
**dass** der Kopplungskörper (15) den zylindrischen Tragkörper (14) überragt und ausgebildet ist, axiale Kräfte auf die Baustruktur (12) zu übertragen.

3. Schwerlastbefestigungsvorrichtung nach Anspruch 2,
**dadurch gekennzeichnet,**
**dass** eine Erstarrungsmasse in einem Ringraum zwischen dem zylindrischen Tragkörper (14) und der Baustruktur (12) angeordnet und ausgebildet ist, einen radialen Formschluss zwischen dem zylindrischen Tragkörper (14) und der Baustruktur (12) bereitzustellen

4. Schwerlastbefestigungsvorrichtung nach Anspruch 3,
**dadurch gekennzeichnet,**
**dass** der zylindrische Tragkörper (14) an einem Außenmantel eine Hinterschneidungsfläche aufweist und die Erstarrungsmasse (20) ausgebildet ist, einen axialen Formschluss zwischen dem zylindrischen Tragkörper (14) und der Baustruktur (12) bereitzustellen

5. Schwerlastbefestigungsvorrichtung nach einem der vorhergehenden Ansprüche
**dadurch gekennzeichnet,**
**dass** der Anschlag (8) durch das Verbindungsstück (7) gebildet ist.

6. Schwerlastbefestigungsvorrichtung nach einem der vorhergehenden Ansprüche
**dadurch gekennzeichnet,**
**dass** der Zugbolzen (3) als Hohlprofil ausgebildet ist und ein Innengewinde (22) aufweist und dass ein Arretierungsmittel (19) ein Außengewinde aufweist, das in das Innengewinde (22) eingeift.

7. Verfahren zur Herstellung einer Schwerlastbefestigung an einer Baustruktur (12) mittels einer Schwerlastbefestigungsvorrichtung nach einem der Ansprüche 1 bis 3, aufweisend folgende Verfahrensschritte:
a) Bereitstellen eines Bohrlochs und der Baustruktur
b) Herstellen einer Montageausgangslage der Schwerlastbefestigungsvorrichtung, wobei der Zugbolzen längs zu den Auflagekörpern und in dem Auflagekörperzwischenraum angeordnet wird
c) axiales Einführen der Schwerlastbefestigungsvorrichtung in deren Montageausgangslage in das Bohrloch, beginnend mit einem vorderen Ende des Zugbolzens bis zu einem Eintritt des zylindrischen Tragkörpers in das Bohrloch
d) Durchführen der schwerkraftbedingten Veränderung der Lage des Ankerelements in eine vertikale Lage zur Bereitstellung einer Montageendlage
e) Einbringen des Verpressmörtels in den Ringraum zwischen dem zylindrischen Tragkörper und der Baustruktur
f) Abwarten einer Aushärtung des Verpressmörtels zur Herstellung eines radialen Formschlusses
